# EUROPEAN PATENT SPECIFICATION

(11) **EP 2 118 203 B1**
(45) Date of publication and mention of the grant of the patent: **23.05.2012**
(21) Application number: 08725033.8
(22) Date of filing: 31.01.2008
(51) Int. Cl.: C08J 5/04, C08L 83/04, B32B 25/20, C08J 5/24

(54) **REINFORCED SILICONE RESIN FILM AND METHOD OF PREPARING SAME**
VERSTÄRKTE SILIKONHARZFOLIE UND VERFAHREN ZU IHRER HERSTELLUNG
FILM EN RÉSINE DE SILICONE RENFORCÉ, ET SON PROCÉDÉ DE PRÉPARATION

(30) Priority: 22.02.2007 US 902805 P
(43) Date of publication of application: 18.11.2009
(73) Proprietor: Dow Corning Corporation, Midland, Michigan 48686-0994 (US)
(72) Inventor: FISHER, Mark, Midland, MI 48640 (US); ZHU, Bizhong, Midland, MI 48640 (US)
(74) Representative: Thomson, Craig Richard
(86) International application number: PCT/US2008/001317
(87) International publication number: WO 2008/103229

(56) References cited:
- WO-A-2006/088645
- FROGLEY MARK D ET AL: "Mechanical properties of carbon nanoparticle-reinforced elastomers" COMPOSITES SCIENCE AND TECHNOLOGY, ELSEVIER, vol. 63, 1 January 2003 (2003-01-01), pages 1647-1654, XP002460139 ISSN: 0266-3538

## Description

### FIELD OF THE INVENTION

The present invention relates to a method of preparing a reinforced silicone resin film and more particularly to a method comprising impregnating a fiber reinforcement in a nanomaterial-filled silicone composition comprising a condensation-curable silicone composition and a carbon nanomaterial, and curing the silicone resin of the impregnated fiber reinforcement. The present invention also relates to a reinforced silicone resin film prepared according to the preceding method.

### BACKGROUND OF THE INVENTION

Silicone resins are useful in a variety of applications by virtue of their unique combination of properties, including high thermal stability, good moisture resistance, excellent flexibility, high oxygen resistance, low dielectric constant, and high transparency. For example, silicone resins are widely used as protective or dielectric coatings in the automotive, electronic, construction, appliance, and aerospace industries.

Although silicone resin coatings can be used to protect, insulate, or bond a variety of substrates, free standing silicone resin films have limited utility due to low tear strength, high brittleness, low glass transition temperature, and high coefficient of thermal expansion. Consequently, there is a need for free standing silicone resin films having improved mechanical and thermal properties.

### SUMMARY OF THE INVENTION

The present invention is directed to a method of preparing a reinforced silicone resin film, the method comprising the steps of:
impregnating a fiber reinforcement in a nanomaterial-filled silicone composition, wherein the nanomaterial-filled silicone composition comprises:
   a condensation-curable silicone composition comprising a silicone resin having an average of at least two silicon-bonded hydrogen atoms, hydroxy groups, or hydrolysable groups per molecule, and
   a carbon nanomaterial; and
curing the silicone resin of the impregnated fiber reinforcement.

The present invention is also directed to a reinforced silicone resin film prepared according to the aforementioned method.

The reinforced silicone resin film of the present invention has low coefficient of thermal expansion, high tensile strength, high modulus, and high resistance to thermally induced cracking compared to silicone resin films prepared from the same silicone composition absent the carbon nanomaterial.

The reinforced silicone resin film of the present invention is useful in applications requiring films having high thermal stability, flexibility, mechanical strength, and transparency. For example, the silicone resin film can be used as an integral component of flexible displays, solar cells, flexible electronic boards, touch screens, fire-resistant wallpaper, and impact-resistant windows. The film is also a suitable substrate for transparent or nontransparent electrodes.

### BRIEF DESCRIPTION OF THE DRAWINGS

Figures 1A and 1B are plan view (i.e., top view) photomicrographs of the reinforced silicone resin film of Example 2 before and after heat treatment, respectively.

Figure 2 is a plan view photomicrograph of the reinforced silicone resin film of Example 3 after heat treatment.

Figure 3 is a plan view photomicrograph of the reinforced silicone resin film of Example 4 after heat treatment.

Figures 4A and 4B are plan view photomicrographs of the reinforced silicone resin film of Comparative Example 1 before and after heat treatment, respectively.

In the Drawings only, the symbol um represents micron.

### DETAILED DESCRIPTION OF THE INVENTION

As used herein, the term "mol% of the groups R² in the silicone resin are hydrogen, hydroxy, or a hydroslysable group" is defined as the ratio of the number of moles of silicon-bonded hydrogen, hydroxy, or hydroslysable groups in the silicone resin to the total number of moles of the groups R² in the resin, multiplied by 100. Further, the term "mol% of the groups R⁴ in the silicone resin are hydroxy or hydrolysable groups" is defined as the ratio of the number of moles of silicon-bonded hydroxy or hydrolysable groups in the silicone resin to the total number of moles of the groups R⁴ in the resin, multiplied by 100.

A method of preparing a reinforced silicone resin film according to the present invention comprises the steps of:
impregnating a fiber reinforcement in a nanomaterial-filled silicone composition,
   wherein the nanomaterial-filled silicone composition comprises:
   a condensation-curable silicone composition comprising a silicone resin having an average of at least two silicon-bonded hydrogen atoms, hydroxy groups, or hydrolysable groups per molecule, and
   a carbon nanomaterial; and
curing the silicone resin of the impregnated fiber reinforcement.

In the first step of the method of preparing a reinforced silicone resin film, a fiber reinforcement is impregnated in a nanomaterial-filled silicone composition, wherein the nanomaterial-filled silicone composition comprises a condensation-curable silicone composition comprising a silicone resin having an average of at least two silicon-bonded hydrogen atoms, hydroxy groups, or hydrolysable groups per molecule, and a carbon nanomaterial.

The condensation-curable silicone composition can be any condensation-curable silicone composition containing a silicone resin having an average of at least two silicon-bonded hydrogen atoms, hydroxy groups, or hydrolysable groups per molecule. Typically, the condensation-curable silicone composition comprises the aforementioned silicone resin and, optionally, a cross-linking agent having silicon-bonded hydrolysable groups and/or a condensation catalyst.

The silicone resin of the condensation-curable silicone composition is typically a copolymer containing T units, T and Q siloxane units, or T and/or Q siloxane units in combination with M and/or D siloxane units. Moreover, the silicone resin can be a rubber-modified silicone resin, described below for the second embodiment of the condensation-curable silicone composition.

According to a first embodiment, the condensation-curable silicone composition comprises a silicone resin having the formula (R¹R²₂SiO_{½})_{w}(R²₂SiO_{2/2})ₓ (R²SiO_{3/2})_{y}(SiO_{4/2})_{z} (I), wherein R¹ is C₁ to C₁₀ hydrocarbyl or C₁ to C₁₀ halogen-substituted hydrocarbyl, R² is R¹, -H, -OH, or a hydrolysable group, w is from 0 to 0.95, x is from 0 to 0.95, y is from 0 to 1, z is from 0 to 0.95, w+x+y+z=1, y+z is from 0.05 to 1, and w+x is from 0 to 0.95, provided the silicone resin has an average of at least two silicon-bonded hydrogen atoms, hydroxy groups, or hydrolysable groups per molecule.

The hydrocarbyl and halogen-substituted hydrocarbyl groups represented by R¹ typically have from 1 to 10 carbon atoms, alternatively from 1 to 6 carbon atoms, alternatively from 1 to 4 carbon atoms. Acyclic hydrocarbyl and halogen-substituted hydrocarbyl groups containing at least 3 carbon atoms can have a branched or unbranched structure. Examples of hydrocarbyl groups represented by R¹ include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, and decyl; cycloalkyl, such as cyclopentyl, cyclohexyl, and methylcyclohexyl; aryl, such as phenyl and naphthyl; alkaryl, such as tolyl and xylyl; aralkyl, such as benzyl and phenethyl; alkenyl, such as vinyl, allyl, and propenyl; arylalkenyl, such as styryl and cinnamyl; and alkynyl, such as ethynyl and propynyl. Examples of halogen-substituted hydrocarbyl groups represented by R¹ include, but are not limited to, 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl.

As used herein the term "hydrolysable group" means the silicon-bonded group reacts with water in either the presence or absence of a catalyst at any temperature from room temperature (~23 ± 2 °C) to 100 °C within several minutes, for example thirty minutes, to form a silanol (Si-OH) group. Examples of hydrolysable groups represented by R² include, but are not limited to, -Cl, -Br, -OR³, -OCH₂CH₂OR³, CH₃C(=O)O-, Et(Me)C=N-O-, CH₃C(=O)N(CH₃)-, and -ONH₂, wherein R³ is C₁ to C₈ hydrocarbyl or C₁ to C₈ halogen-substituted hydrocarbyl.

The hydrocarbyl and halogen-substituted hydrocarbyl groups represented by R³ typically have from 1 to 8 carbon atoms, alternatively from 3 to 6 carbon atoms. Acyclic hydrocarbyl and halogen-substituted hydrocarbyl groups containing at least 3 carbon atoms can have a branched or unbranched structure. Examples of hydrocarbyl groups represented by R³ include, but are not limited to, unbranched and branched alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, and octyl; cycloalkyl, such as cyclopentyl, cyclohexyl, and methylcyclohexyl; phenyl; alkaryl, such as tolyl and xylyl; aralkyl, such as benzyl and phenethyl; alkenyl, such as vinyl, allyl, and propenyl; arylalkenyl, such as styryl; and alkynyl, such as ethynyl and propynyl. Examples of halogen-substituted hydrocarbyl groups represented by R³ include, but are not limited to, 3,3,3-trifluoropropyl, 3- chloropropyl, chlorophenyl, and dichlorophenyl.

In the formula (I) of the silicone resin, the subscripts w, x, y, and z are mole fractions. The subscript w typically has a value of from 0 to 0.95, alternatively from 0.02 to 0.75, alternatively from 0.05 to 0.3; the subscript x typically has a value of from 0 to 0.95, alternatively from 0 to 0.7, alternatively from 0 to 0.25; the subscript y typically has a value of from 0 to 1, alternatively from 0.25 to 0.8, alternatively from 0.5 to 0.8; the subscript z typically has a value of from 0 to 0.95, alternatively from 0 to 0.7, alternatively from 0 to 0.15. Also, the sum y+z is typically from 0.05 to 1, alternatively from 0.5 to 0.95, alternatively from 0.65 to 0.9. Further, the sum w+x is typically from 0 to 0.95, alternatively from 0.05 to 0.5, alternatively from 0.1 to 0.35.

Typically, at least 10 mol%, alternatively at least 50 mol%, alternatively at least 80 mol% of the groups R² in the silicone resin are hydrogen, hydroxy, or a hydrolysable group.

The silicone resin typically has a number-average molecular weight (Mₙ) of from 500 to 50,000, alternatively from 500 to 10,000, alternatively 1,000 to 3,000, where the molecular weight is determined by gel permeation chromatography employing a low angle laser light scattering detector, or a refractive index detector and silicone resin (MQ) standards.

The viscosity of the silicone resin at 25 °C is typically from 0.01 to 100,000 Pa·s, alternatively from 0.1 to 10,000 Pa·s, alternatively from 1 to 100 Pa·s.

The silicone resin contains R²SiO_{3/2} units (i.e., T units), R²SiO_{3/2} units (i.e., T units) and SiO_{4/2} units (i.e., Q units), or R²SiO_{3/2} units (i.e., T units) and/or SiO_{4/2} units (i.e., Q units) in combination with R¹R²₂SiO_{1/2} units (i.e., M units) and/or R²₂SiO_{2/2} units (i.e., D units), where R¹ and R² are as described and exemplified above. For example, the silicone resin can be a T resin, a TQ resin, a DT resin, an MT resin, an MDT resin, an MQ resin, a DQ resin, an MDQ resin, an MTQ resin, a DTQ resin, or an MDTQ resin.

Examples of silicone resins include, but are not limited to, resins having the following formulae:
(MeSiO_{3/2})ₙ, (PhSiO_{3/2})ₙ, (Me₃SiO_{1/2})_{0.8}(SiO_{4/2})_{0.2}, (MeSiO_{3/2})_{0.67}(PhSiO_{3/2})_{0.33}, (MeSiO_{3/2})_{0.45}(PhSiO_{3/2})_{0.40}(Ph₂SiO_{2/2})_{0.1}(PhMeSiO_{2/2})_{0.05},
(PhSiO_{3/2})_{0.4}(MeSiO_{3/2})_{0.45}(PhSiO_{3/2})_{0.1}(PhMeSiO_{2/2})_{0.05}, and (PhSiO_{3/2})_{0.4}(MeSiO_{3/2})_{0.1}(PhMeSiO_{2/2})_{0.5}, where Me is methyl, Ph is phenyl, the numerical subscripts outside the parenthesis denote mole fractions, and the subscript n has a value such that the silicone resin has a number-average molecular weight of from 500 to 50,000. Also, in the preceding formulae, the sequence of units is unspecified.

The first emobodiment of the condensation-curable silicone composition can comprise a single silicone resin or a mixture comprising two or more different silicone resins, each as described above.

Methods of preparing silicone resins containing silicon-bonded hydrogen atoms, hydroxy groups, or hydrolysable groups are well known in the art; many of these resins are commercially available. Silicone resins are typically prepared by cohydrolyzing the appropriate mixture of silane precursors in an organic solvent, such as toluene. For example, a silicone resin can be prepared by cohydrolyzing a silane having the formula R¹ R²₂SiX and a silane having the formula R²SiX₃ in toluene, where R¹ is C₁ to C₁₀ hydrocarbyl or C₁ to C₁₀ halogen-substituted hydrocarby, R² is R¹, -H, or a hydrolysable group, and X is a hydrolysable group, provided when R² is a hydrolysable group, X is more reactive in the hydrolysis reaction than R². The aqueous hydrochloric acid and silicone hydrolyzate are separated and the hydrolyzate is washed with water to remove residual acid and heated in the presence of a mild condensation catalyst to "body" (i.e., condense) the resin to the requisite viscosity. If desired, the resin can be further treated with a condensation catalyst in an organic solvent to reduce the content of silicon-bonded hydroxy groups.

The first embodiment of the condensation-curable silicone composition can comprise additional ingredients, provided the ingredient does not prevent the silicone resin from curing to form a cured silicone resin having low coefficient of thermal expansion, high tensile strength, and high modulus, as described below. Examples of additional ingredients include, but are not limited to, adhesion promoters; dyes; pigments; anti-oxidants; heat stabilizers; UV stabilizers; flame retardants; flow control additives; organic solvents, cross-linking agents, and condensation catalysts.

For example the silicone composition can further comprises a cross-linking agent and/or a condensation catalyst. The cross-linking agent can have the formula R³_{q}SiX_{4-q}, wherein R³ is C₁ to C₈ hydrocarbyl or C₁ to C₈ halogen-substituted hydrocarbyl, X is a hydrolysable group, and q is 0 or 1. The hydrocarbyl and halogen-substituted hydrocarbyl groups represented by R³, and the hydrolysable groups represented by X are as described and exemplified above.

Examples of cross-linking agents include, but are not limited to, alkoxy silanes such as MeSi(OCH₃)₃, CH₃Si(OCH₂CH₃)_{3,} CH₃Si(OCH₂CH₂CH₃)₃, CH₃Si[O(CH₂)₃CH₃]₃, CH₃CH₂Si(OCH₂CH₃)₃, C₆H₅Si(OCH₃)₃, C₆H₅CH₂Si(OCH₃)₃, C₆H₅Si(OCH₂CH₃)₃, CH₂=CHSi(OCH₃)₃, CH₂=CHCH₂Si(OCH₃)₃, CF₃CH₂CH₂Si(OCH₃)₃, CH₃Si(OCH₂CH₂OCH₃)₃, CF₃CH₂CH₂Si(OCH₂CH₂OCH₃)₃, CH₂=CHSi(OCH₂CH₂OCH₃)₃, CH₂=CHCH₂Si(OCH₂CH₂OCH₃)₃, C₆H₅Si(OCH₂CH₂OCH₃)₃, Si(OCH₃)₄, Si(OC₂H₅)₄, and Si(OC₃H₇)₄; organoacetoxysilanes such as CH₃Si(OCOCH₃)₃, CH₃CH₂Si(OCOCH₃)₃, and CH₂=CHSi(OCOCH₃)₃; organoiminooxysilanes such as CH₃Si[O-N=C(CH₃)CH₂CH₃]₃, Si[O-N=C(CH₃)CH₂CH₃]₄, and CH₂=CHSi[O-N=C(CH₃)CH₂CH₃]₃; organoacetamidosilanes such as CH₃Si[NHC(=O)CH₃]₃ and C₆H₅Si[NHC(=O)CH₃]₃; amino silanes such as CH₃Si[NH(s-C₄H₉)]₃ and CH₃Si(NHC₆H₁₁)₃; and organoaminooxysilanes.

The cross-linking agent can be a single silane or a mixture of two or more different silanes, each as described above. Also, methods of preparing tri- and tetra-functional silanes are well known in the art; many of these silanes are commercially available.

When present, the concentration of the cross-linking agent in the silicone composition is sufficient to cure (cross-link) the silicone resin. The exact amount of the cross-linking agent depends on the desired extent of cure, which generally increases as the ratio of the number of moles of silicon-bonded hydrolysable groups in the cross-linking agent to the number of moles of silicon-bonded hydrogen atoms, hydroxy groups, or hydrolysable groups in the silicone resin increases. Typically, the concentration of the cross-linking agent is sufficient to provide from 0.2 to 4 moles of silicon-bonded hydrolysable groups per mole of silicon-bonded hydrogen atoms, hydroxy groups, or hydrolysable groups in the silicone resin. The optimum amount of the cross-linking agent can be readily determined by routine experimentation.

As stated above, the first embodiment of the condensation-curable silicone composition can further comprise at least one condensation catalyst. The condensation catalyst can be any condensation catalyst typically used to promote condensation of silicon-bonded hydroxy (silanol) groups to form Si-O-Si linkages. Examples of condensation catalysts include, but are not limited to, amines; and complexes of lead, tin, zinc, and iron with carboxylic acids. In particular, the condensation catalyst can be selected from tin(II) and tin(IV) compounds such as tin dilaurate, tin dioctoate, and tetrabutyl tin; and titanium compounds such as titanium tetrabutoxide.

When present, the concentration of the condensation catalyst is typically from 0.1 to 10% (w/w), alternatively from 0.5 to 5% (w/w), alternatively from 1 to 3% (w/w), based on the total weight of the silicone resin.

According to a second embodiment, the condensation-curable silicone composition comprises (A) a rubber-modified silicone resin prepared by reacting an organosilicon compound selected from (i) a silicone resin having the formula (R¹R⁴₂SiO_{1/2})_{w} (R⁴₂SiO_{2/2})ₓ(R⁴SiO_{3/2})_{y}(SiO_{4/2})_{z} (II) and (ii) hydrolysable precursors of (i), and a silicone rubber having the formula R⁵₃SiO(R¹R⁵SiO)ₘSiR⁵₃ (III) in the presence of water, a condensation catalyst, and an organic solvent to form a soluble reaction product, wherein R¹ is C₁ to C₁₀ hydrocarbyl or C₁ to C₁₀ halogen-substituted hydrocarbyl, R⁴ is R¹, -OH, or a hydrolysable group, R⁵ is R¹ or a hydrolysable group, m is from 2 to 1,000, w is from 0 to 0.95, x is from 0 to 0.95, y is from 0 to 1, z is from 0 to 0.95, w+x+y+z=1, y+z is from 0.05 to 1, and w+x is from 0 to 0.95, provided the silicone resin (II) has an average of at least two silicon-bonded hydroxy or hydrolysable groups per molecule, the silicone rubber (III) has an average of at least two silicon-bonded hydrolysable groups per molecule, and the mole ratio of silicon-bonded hydrolysable groups in the silicone rubber (III) to silicon-bonded hydroxy or hydrolysable groups in the silicone resin (II) is from 0.01 to 1.5; and (B) a condensation catalyst.

Component (A) is a rubber-modified silicone resin prepared by reacting an organosilicon compound selected from (i) at least one silicone resin having the formula (R¹R⁴₂SiO_{1/2})_{w}(R⁴2SiO_{2/2})ₓ(R⁴SiO_{3/2})_{y}(SiO_{4/2})_{z} (II) and (ii) hydrolysable precursors of (i), and at least one silicone rubber having the formula R⁵₃SiO(R¹R⁵SiO)ₘSiR⁵₃ (III) in the presence of water, a condensation catalyst, and an organic solvent to form a soluble reaction product, wherein R¹, w, x, y, z, y+z, and w+x are as described and exemplified above for the silicone resin having the formula (I), the hydrolysable groups represented by R⁴ and R⁵ are as described and exemplified above for R², and m has a value of from 2 to 1,000, provided the silicone resin (II) has an average of at least two silicon-bonded hydroxy or hydrolysable groups per molecule, the silicone rubber (III) has an average of at least two silicon-bonded hydrolysable groups per molecule, and the mole ratio of silicon-bonded hydrolysable groups in the silicone rubber (III) to silicon-bonded hydroxy or hydrolysable groups in the silicone resin (II) is from 0.01 to 1.5. As used herein, the term "soluble reaction product" means the product of the reaction for preparing component (A) is miscible in the organic solvent and does not form a precipitate or suspension.

Typically at least 10 mol%, alternatively at least 50 mol%, alternatively at least 80 mol% of the groups R⁴ in the silicone resin (i) are hydroxy or hydrolysable groups.

The silicone resin (i) typically has a number-average molecular weight (Mₙ) of from 500 to 50,000, alternatively from 500 to 10,000, alternatively 1,000 to 3,000, where the molecular weight is determined by gel permeation chromatography employing a low angle laser light scattering detector, or a refractive index detector and silicone resin (MQ) standards.

The viscosity of the silicone resin (i) at 25 °C is typically from 0.01 to 100,000 Pa·s, alternatively from 0.1 to 10,000 Pa·s, alternatively from 1 to 100 Pa·s.

The silicone resin (i) contains R⁴SiO_{3/2} units (i.e., T units), R⁴SiO_{3/2} units (i.e., T units) and SiO_{4/2} units (i.e., Q units), or R⁴SiO_{3/2} units (i.e., T units) and/or SiO_{4/2} units (i.e., Q units) in combination with R¹R⁴₂SiO_{1/2} units (i.e., M units) and/or R⁴₂SiO_{2/2} units (i.e., D units), where R¹ and R⁴ are as described and exemplified above. For example, the silicone resin can be a T resin, a TQ resin, a DT resin, an MT resin, an MDT resin, an MQ resin, a DQ resin, an MDQ resin, an MTQ resin, a DTQ resin, or an MDTQ resin.

Examples of silicone resins suitable for use as silicone resin (i) include, but are not limited to, resins having the following formulae:
(MeSiO_{3/2})ₙ, (PhSiO_{3/2})ₙ, (PhSiO_{3/2})_{0.4}(MeSiO_{3/2})_{0.45}(PhSiO_{3/2})_{0.1}(PhMeSiO_{2/2})_{0.05}, and (PhSiO_{3/2})_{0.3}(SiO_{4/2})_{0.1}(Me₂SiO_{2/2})_{0.2}(Ph₂SiO_{2/2})_{0.4}, where Me is methyl, Ph is phenyl, the numerical subscripts outside the parenthesis denote mole fractions, and the subscript n has a value such that the silicone resin has a number-average molecular weight of from 500 to 50,000. Also, in the preceding formulae, the sequence of units is unspecified.

Silicone resin (i) can be a single silicone resin or a mixture comprising two or more different silicone resins, each having the formula (II).

Methods of preparing silicone resins suitable for use as silicone resin (i) are well known in the art; many of these resins are commercially available. For example, silicone resins are typically prepared by cohydrolyzing the appropriate mixture of silane precursors in an organic solvent, such as toluene, as described above for the silicone resin having the formula (I).

The organosilicon compound can also be (ii) hydrolysable precursors of the silicone resin having the formula (II). As used herein, the term "hydrolysable precursors" refers to silanes having hydrolysable groups that are suitable for use as starting materials (precursors) for preparation of the silicone resin having the formula (II). The hydrolysable precursors can be represented by the formulae R¹R⁴₂SiX, R⁴₂SiX₂, R⁴SiX₃, and SiX₄, wherein R¹ is C₁ to C₁₀ hydrocarbyl or C1 to C₁₀ halogen-substituted hydrocarbyl, R⁴ is R¹ or a hydrolysable group, and X is a hydrolysable group. Examples of hydrolysable precursors include, but are not limited to, silanes having the formulae:
Me₂ViSiCl, Me₃SiCl, MeSi(OEt)₃, PhSiCl₃, MeSiCl₃, Me₂SiCl₂, PhMeSiCl₂, SiCl₄, Ph₂SiCl₂, PhSi(OMe)₃, MeSi(OMe)₃, PhMeSi(OMe)₂, and Si(OEt)₄, wherein Me is methyl, Et is ethyl, and Ph is phenyl.

Methods of preparing silanes having hydrolysable groups are well known in the art; many of these compounds are commercially available.

In the formula (III) of the silicone rubber, R¹ and R⁵ are as described and exemplified above, and the subscript m typically has a value of from 2 to 1,000, alternatively from 4 to 500, alternatively from 8 to 400.

Examples of silicone rubbers having the formula (III) include, but are not limited to, silicone rubbers having the following formulae:
(EtO)₃SiO(Me₂SiO)₅₅Si(OEt)₃, (EtO)₃SiO(Me₂SiO)₁₆Si(OEt)₃, (EtO)₃SiO(Me₂SiO)₃₈₆Si(OEt)₃, and (EtO)₂MeSiO(PhMeSiO)₁₀SiMe(OEt)₂, wherein Me is methyl and Et is ethyl.

The silicone rubber having the formula (III) can be a single silicone rubber or a mixture comprising two or more different silicone rubbers, each having the formula (III). For example the silicone rubber can comprise a first silicone rubber having a dp (degree of polymerization), denoted by the value of m in formula III, of about 15 and a second silicone rubber having a dp of about 350.

Methods of preparing silicone rubbers containing silicon-bonded hydrolysable groups are well known in the art; many of these compounds are commercially available.

The condensation catalyst used in the preparation of the rubber-modified silicone resin of component (A) is as described and exemplified above for the first embodiment of the condensation-curable silicone composition. In particular, titanium compounds are suitable condensation catalysts for use in the preparation of component (A).

The organic solvent is at least one organic solvent. The organic solvent can be any aprotic or dipolar aprotic organic solvent that does not react with the organosilicon compound, the silicone rubber, or the rubber-modified silicone resin under the conditions for preparing component (A), described below, and is miscible with the aforementioned components.

Examples of organic solvents include, but are not limited to, saturated aliphatic hydrocarbons such as n-pentane, hexane, n-heptane, isooctane and dodecane; cycloaliphatic hydrocarbons such as cyclopentane and cyclohexane; aromatic hydrocarbons such as benzene, toluene, xylene and mesitylene; cyclic ethers such as tetrahydrofuran (THF) and dioxane; ketones such as methyl isobutyl ketone (MIBK); halogenated alkanes such as trichloroethane; and halogenated aromatic hydrocarbons such as bromobenzene and chlorobenzene. The organic solvent can be a single organic solvent or a mixture comprising two or more different organic solvents, each as defined above.

The organosilicon compound, the silicone rubber, condensation catalyst, and organic solvent can be combined in any order. Typically, the organosilicon compound, silicone rubber, and organic solvent are combined before the introduction of the condensation catalyst.

The mole ratio of silicon-bonded hydrolysable groups in the silicone rubber to silicon-bonded hydroxy or hydrolysable groups in the silicone resin having the formula (II) is typically from 0.01 to 1.5, alternatively from 0.05 to 0.8, alternatively from 0.2 to 0.5.

The concentration of water in the reaction mixture depends on the nature of the groups R⁴ in the organosilicon compound and the nature of the silicon-bonded hydrolysable groups in the silicone rubber. When the organosilicon compound contains hydrolysable groups, the concentration of water is sufficient to effect hydrolysis of the hydrolysable groups in the organosilicon compound and the silicone rubber. For example, the concentration of water is typically from 0.01 to 3 moles, alternatively from 0.05 to 1 moles, per mole of hydrolysable group in the organosilicon compound and the silicone rubber combined. When the organosilicon compound does not contain hydrolysable groups, only a trace amount, e.g., 100 ppm, of water is required in the reaction mixture. Trace amounts of water are normally present in the reactants and/or solvent.

The concentration of the condensation catalyst is sufficient to catalyze the condensation reaction of the organosilicon compound with the silicone rubber. Typically, the concentration of the condensation catalyst is from 0.01 to 2% (w/w), alternatively from 0.01 to 1% (w/w), alternatively from 0.05 to 0.2% (w/w), based on the weight of the organosilicon compound.

The concentration of the organic solvent is typically from 10 to 95% (w/w), alternatively from 20 to 85% (w/w), alternatively from 50 to 80% (w/w), based on the total weight of the reaction mixture.

The reaction is typically carried out at a temperature of from room temperature (~23 ± 2 °C) to 180°C, alternatively from room temperature to 100 °C.

The reaction time depends on several factors, including the structures of the organosilicon compound and the silicone rubber, and the temperature. The components are typically allowed to react for a period of time sufficient to complete the condensation reaction. This means the components are allowed to react until at least 95 mol%, alternatively at least 98 mol%, alternatively at least 99 mol%, of the silicon-bonded hydrolysable groups originally present in the silicone rubber have been consumed in the condensation reaction , as determined by ²⁹Si NMR spectrometry. The time of reaction is. typically from 1 to 30 h at a temperature of from room temperature (~23 ± 2 °C) to 100 °C. The optimum reaction time can be determined by routine experimentation using the methods set forth in the Examples section below.

The rubber-modified silicone resin can be used without isolation or purification in the second embodiment of the condensation-curable silicone composition or the resin can be separated from most of the solvent by conventional methods of evaporation. For example, the reaction mixture can be heated under reduced pressure.

Component (B) of the second embodiment of the condensation-curable silicone composition is at least one condensation catalyst, where the catalyst is as described and exemplified above for the first embodiment of the silicone composition. In particular, zinc compounds and amines are suitable for use as component (B) of the present silicone composition.

The concentration of component (B) is typically from 0.1 to 10% (w/w), alternatively from 0.5 to 5% (w/w), alternatively from 1 to 3% (w/w), based on the weight of component (A).

The second embodiment of the condensation-curable silicone composition can comprise additional ingredients, provided the ingredient does not prevent the silicone resin from curing to form a cured silicone resin having low coefficient of thermal expansion, high tensile strength, and high modulus, as described below. Examples of additional ingredients include, but are not limited to, adhesion promoters, dyes, pigments, anti-oxidants, heat stabilizers, UV stabilizers, flame retardants, flow control additives, cross-linking agents, and organic solvents.

For example the second embodiment of the condensation-curable silicone composition can further comprises a cross-linking agent having the formula R³_{q}SiX_{4-q}, wherein R³, X, and q are as described and exemplified above for the cross-linking agent of the first embodiment. The cross-linking agent can be a single silane or a mixture of two or more different silanes, each as described above.

When present, the concentration of the cross-linking agent in the second embodiment of the condensation-curable silicone composition is sufficient to cure (cross-link) the rubber-modified silicone resin of component (A). The exact amount of the cross-linking agent depends on the desired extent of cure, which generally increases as the ratio of the number of moles of silicon-bonded hydrolysable groups in the cross-linking agent to the number of moles of silicon-bonded hydroxy or hydrolysable groups in the rubber-modified silicone resin increases. Typically, the concentration of the cross-linking agent is sufficient to provide from 0.2 to 4 moles of silicon-bonded hydrolysable groups per mole of silicon-bonded hydroxy or hydrolysable groups in the rubber-modified silicone resin. The optimum amount of the cross-linking agent can be readily determined by routine experimentation.

The carbon nanomaterial of the nanomaterial-filled silicone composition can be any carbon material having at least one physical dimension (e.g., particle diameter, fiber diameter, layer thickness) less than about 200 nm. Examples of carbon nanomaterials include, but are not limited to, carbon nanoparticles having three dimensions less than about 200 nm, such as quantum dots, hollow spheres, and fullerenes; fibrous carbon nanomaterials having two dimensions less than about 200 nm, such as nanotubes (e.g., single-walled nanotubes and multi-walled nanotubes) and nanofibers (e.g., axially aligned, platelet, and herringbone or fishbone nanofibers); and layered carbon nanomaterials having one dimension less than about 200 nm, such as carbon nanoplatelets (e.g., exfoliated graphite and graphene sheet). The carbon nanomaterial can be electrically conductive or semiconductive.

The carbon nanomaterial can also be an oxidized carbon nanomaterial, prepared by treating the aforementioned carbon nanomaterials with an oxidizing acid or mixture of acids at elevated temperature. For example, the carbon nanomaterial can be oxidized by heating the material in a mixture of concentrated nitric and concentrated sulfuric acid (1:3 v/v, 25 mL/g carbon) at a temperature of from 40 to 150 °C for 1-3 hours.

The carbon nanomaterial can be a single carbon nanomaterial or a mixture comprising at least two different carbon nanomaterials, each as described above.

The concentration of the carbon nanomaterial is typically from 0.0001 to 99% (w/w), alternatively from 0.001 to 50% (w/w), alternatively from 0.01 to 25% (w/w), alternatively from 0.1 to 10% (w/w), alternatively from 1 to 5% (w/w), based on the total weight of the nanomaterial-filled silicone composition.

Methods of preparing carbon nanomaterials are well-known in the art. For example, carbon nanoparticles (e.g., fullerenes) and fibrous carbon nanomaterials (e.g., nanotubes, and nanofibers) can be prepared using at least one of the following methods: arc discharge, laser ablation, and catalytic chemical vapor deposition. In the arc discharge process, an arc discharge between two graphite rods produces, depending on the gas atmosphere, single-walled nanotubes, multi-walled nanotubes, and fullerenes. In the laser ablation method, a graphite target loaded with a metal catalyst is irradiated with a laser in a tube furnace to produce single- and multi-walled nanotubes. In the catalytic chemical vapor deposition method, a carbon-containing gas or gas mixture is introduced into a tube furnace containing a metal catalyst at a temperature of from 500 to 1000 °C (and different pressures) to produce carbon nanotubes and nanofibers. Carbon nanoplatelets can be prepared by the intercalation and exfoliation of graphite.

The nanomaterial-filled silicone composition can be a one-part composition containing the silicone resin and carbon nanomaterial in a single part or, alternatively, a multi-part composition comprising these components in two or more parts. When the silicone composition contains a condensation catalyst, the composition is typically a two-part composition where the silicone resin and condensation catalyst are in separate parts.

The fiber reinforcement can be any reinforcement comprising fibers, provided the reinforcement has a high modulus and high tensile strength. The fiber reinforcement typically has a Young's modulus at 25 °C of at least 3 GPa. For example, the reinforcement typically has a Young's modulus at 25 °C of from 3 to 1,000 GPa, alternatively from 3 to 200 GPa, alternatively from 10 to 100 GPa. Moreover, the reinforcement typically has a tensile strength at 25 °C of at least 50 MPa. For example, the reinforcement typically has a tensile strength at 25 °C of from 50 to 10,000 MPa, alternatively from 50 to 1,000 MPa, alternatively from 50 to 500 MPa.

The fiber reinforcement can be a woven fabric, e.g., a cloth; a nonwoven fabric, e.g., a mat or roving; or loose (individual) fibers. The fibers in the reinforcement are typically cylindrical in shape and have a diameter of from 1 to 100 µm, alternatively from 1 to 20 µm, alternatively form 1 to 10 µm. Loose fibers may be continuous, meaning the fibers extend throughout the reinforced silicone resin film in a generally unbroken manner, or chopped.

The fiber reinforcement is typically heat-treated prior to use to remove organic contaminants. For example, the fiber reinforcement is typically heated in air at an elevated temperature, for example, 575 °C, for a suitable period of time, for example 2 h.

Examples of fiber reinforcements include, but are not limited to reinforcements comprising glass fibers; quartz fibers; graphite fibers; nylon fibers; polyester fibers; aramid fibers, such as Kevlar® and Nomex®; polyethylene fibers; polypropylene fibers; and silicon carbide fibers.

The fiber reinforcement can be impregnated in a nanomaterial-filled silicone composition using a variety of methods. For example, according to a first method, the fiber reinforcement can be impregnated by (i) applying a nanomaterial-filled silicone composition to a release liner to form a silicone film; (ii) embedding a fiber reinforcement in the film; and (iii) applying the nanomaterial-filled silicone composition to the embedded fiber reinforcement to form an impregnated fiber reinforcement.

In step (i), a nanomaterial-filled silicone composition, described above, is applied to a release liner to form a silicone film. The release liner can be any rigid or flexible material having a surface from which the reinforced silicone resin film can be removed without damage by delamination after the silicone resin is cured, as described below. Examples of release liners include, but are not limited to, Nylon, polyethyleneterephthalate, and polyimide.

The nanomaterial-filled silicone composition can be applied to the release liner using conventional coating techniques, such as spin coating, dipping, spraying, brushing, extrusion, or screen-printing. The silicone composition is applied in an amount sufficient to embed the fiber reinforcement in step (ii), below.

In step (ii), a fiber reinforcement is embedded in the silicone film. The fiber reinforcement can be embedded in the silicone film by simply placing the reinforcement on the film and allowing the silicone composition of the film to saturate the reinforcement.

In step (iii), the nanomaterial-filled silicone composition is applied to the embedded fiber reinforcement to form an impregnated fiber reinforcement. The silicone composition can be applied to the embedded fiber reinforcement using conventional methods, as described above for step (i).

The first method can further comprise the steps of (iv) applying a second release liner to the impregnated fiber reinforcement to form an assembly; and (v) compressing the assembly. Also, the first method can further comprise after step (ii) and before step (iii), degassing the embedded fiber reinforcement and/or after step (iii) and before step (iv), degassing the impregnated fiber reinforcement.

The assembly can be compressed to remove excess silicone composition and/or entrapped air, and to reduce the thickness of the impregnated fiber reinforcement. The assembly can be compressed using conventional equipment such as a stainless steel roller, hydraulic press, rubber roller, or laminating roll set. The assembly is typically compressed at a pressure of from 1,000 Pa to 10 MPa and at a temperature of from room temperature (-23 + 2 °C) to 50 °C.

The embedded fiber reinforcement or impregnated fiber reinforcement can be degassed by subjecting it to a vacuum at a temperature of from room temperature (~23 ± 2 °C) to 60 °C, for a period of time sufficient to remove entrapped air in the embedded reinforcement.

Alternatively, according to a second method, the fiber reinforcement can be impregnated in a nanomaterial-filled silicone composition by (i) depositing a fiber reinforcement on a release liner; (ii) embedding the fiber reinforcement in a nanomaterial-filled silicone composition; and (iii) applying the nanomaterial-filled silicone composition to the embedded fiber reinforcement to form an impregnated fiber reinforcement. The second method can further comprise the steps of (iv) applying a second release liner to the impregnated fiber reinforcement to form an assembly; and (v) compressing the assembly. In the second method, steps (iii) to (v) are as described above for the first method of impregnating a fiber reinforcement in a nanomaterial-filled silicone composition. Also, the second method can further comprise after step (ii) and before step (iii), degassing the embedded fiber reinforcement and/or after step (iii) and before step (iv), degassing the impregnated fiber reinforcement.

In step (ii), the fiber reinforcement is embedded in a nanomaterial-filled silicone composition. The reinforcement can be embedded in the nanomaterial-filled silicone composition by simply covering the reinforcement with the composition and allowing the composition to saturate the reinforcement.

Furthermore, when the fiber reinforcement is a woven or nonwoven fabric, the reinforcement can be impregnated in a nanaomaterial-filled silicone composition by passing it through the composition. The fabric is typically passed through the nanomaterial-filled silicone composition at a rate of from 1 to 1,000 cm/s at room temperature (~23 ± 2 °C).

In the second step of the method of preparing a reinforced silicone resin film, the silicone resin of the impregnated fiber reinforcement is cured. The conditions for curing the silicone resin depend on the nature of the silicon-bonded groups in the resin. For example, when the silicone resin of the impregnated fiber reinforcement contains silicon-bonded hydroxy groups, the silicone resin can be cured (i.e., cross-linked) by heating the impregnated fiber reinforcement. For example, the silicone resin can typically be cured by heating the impregnated fiber reinforcement at a temperature of from 50 to 250 °C, for a period of from 1 to 50 h. When the silicone composition comprises a condensation catalyst, the silicone resin can typically be cured at a lower temperature, e.g., from room temperature (~23 ± 2 °C) to 200 °C.

Also, when the silicone resin of the impregnated fiber reinforcement contains silicon-bonded hydrogen atoms (e.g., silicone resin of the first embodiment of the silicone composition), the silicone resin can be cured by exposing the impregnated fiber reinforcement to moisture or oxygen at a temperature of from 100 to 450 °C for a period of from 0.1 to 20 h. When the silicone composition contains a condensation catalyst, the silicone resin can typically be cured at a lower temperature, e.g., from room temperature (~23 ± 2 °C) to 400 °C.

Further, when the silicone resin of the impregnated fiber reinforcement contains silicon-bonded hydrolysable groups, the silicone resin can be cured by exposing the impregnated fiber reinforcement to moisture at a temperature of from room temperature (~23 ± 2 °C) to 250 °C, alternatively from 100 to 200 °C, for a period of from 1 to 100 h. For example, the silicone resin can typically be cured by exposing the impregnated fiber reinforcement to a relative humidity of 30% at a temperature of from about room temperature (~23 ± 2 °C) to 150 °C, for period from 0.5 to 72 h. Cure can be accelerated by application of heat, exposure to high humidity, and/or addition of a condensation catalyst to the composition.

The silicone resin of the impregnated fiber reinforcement can be cured at atmospheric or subatmospheric pressure, depending on the method, described above, employed to impregnate the fiber reinforcement in the condensation-curable silicone composition. For example, when the impregnated fiber reinforcement is not enclosed between a first and second release liner, the silicone resin is typically cured at atmospheric pressure in air. Alternatively, when the impregnated fiber reinforcement is enclosed between a first and second release liner, the silicone resin is typically cured under reduced pressure. For example, the silicone resin can be heated under a pressure of from 1,000 to 20,000 Pa, alternatively from 1,000 to 5,000 Pa. The silicone resin can be cured under reduced pressure using a conventional vacuum bagging process. In a typically process, a bleeder (e.g., polyester) is applied over the impregnated fiber reinforcement, a breather (e.g, Nylon, polyester) is applied over the bleeder, a vacuum bagging film (e.g., Nylon) equipped with a vacuum nozzle is applied over the breather, the assembly is sealed with tape, a vacuum (e.g., 1,000 Pa) is applied to the sealed assembly and, if necessary, the evacuated assembly is heated as described above.

The method of preparing the reinforced silicone resin film can further comprise the step of separating the cured silicone resin film from the release liner(s). The cured silicone resin film can be separated from the release liner by mechanically peeling the film away from the release liner.

The method of the present invention can further comprise repeating the steps of impregnating and curing to increase the thickness of the silicone resin film, provided the same nanomaterial-filled silicone composition is used for each impregnation.

The method of the present invention can further comprise forming a coating on at least a portion of the reinforced silicone resin film, provided the coating and the cured silicone resin of the film differ in at least one of numerous physical and chemical properties, including thickness, polymer composition, cross-link density, and concentration of carbon nanomaterial or fiber reinforcement. Examples of coatings include, but are not limited to, cured silicone resins prepared by curing hydrosilylation-curable silicone resins or condensation-curable silicone resins; cured silicone resins prepared by curing sols of organosilsesquioxane resins; inorganic oxides, such as indium tin oxide, silicon dioxide, and titanium dioxide; inorganic nitrides, such as silicon nitride and gallium nitride; metals, such as copper, silver, gold, nickel, and chromium; and silicon, such as amorphous silicon, microcrystalline silicon, and polycrystalline silicon.

The reinforced silicone resin film of the present invention typically comprises from 10 to 99% (w/w), alternatively from 30 to 95% (w/w), alternatively from 60 to 95% (w/w), alternatively from 80 to 95% (w/w), of the cured silicone resin. Also, the reinforced silicone resin film typically has a thickness of from 15 to 500 µm, alternatively from 15 to 300 µm, alternatively from 20 to 150 µm, alternatively from 30 to 125 µm.

The reinforced silicone resin film typically has a flexibility such that the film can be bent over a cylindrical steel mandrel having a diameter less than or equal to 3.2 mm without cracking, where the flexibility is determined as described in ASTM Standard D522-93a, Method B.

The reinforced silicone resin film has low coefficient of linear thermal expansion (CTE), high tensile strength, high modulus, and high resistance to thermally induced cracking compared to silicone resin films prepared from the same silicone composition absent the carbon nanomaterial. For example the film typically has a CTE of from 0 to 80 µm/m°C, alternatively from 0 to 20 µm/m°C, alternatively from 2 to 10 µm/m°C, at temperature of from room temperature (~23 ± 2 °C) to 200°C. Also, the film typically has a tensile strength at 25 °C of from 50 to 200 MPa, alternatively from 80 to 200 MPa, alternatively from 100 to 200 MPa. Further, the reinforced silicone resin film typically has a Young's modulus at 25 °C of from 2 to 10 GPa, alternatively from 2 to 6 GPa, alternatively from 3 to 5 GPa.

The transparency of the reinforced silicone resin film depends on a number of factors, such as the composition of the cured silicone resin, the thickness of the film, and the refractive index of the fiber reinforcement. The reinforced silicone resin film typically has a transparency (% transmittance) of at least 5%, alternatively at least 10%, alternatively at least 25%, alternatively at least 45%, in the visible region of the electromagnetic spectrum.

The reinforced silicone resin film of the present invention is useful in applications requiring films having high thermal stability, flexibility, mechanical strength, and transparency. For example, the silicone resin film can be used as an integral component of flexible displays, solar cells, flexible electronic boards, touch screens, fire-resistant wallpaper, and impact-resistant windows. The film is also a suitable substrate for transparent or nontransparent electrodes.

### EXAMPLES

The following examples are presented to better illustrate the reinforced silicone resin film of the present invention, but are not to be considered as limiting the invention, which is delineated in the appended claims. Unless otherwise noted, all parts and percentages reported in the examples are by weight. The following materials were employed in the examples:

Pyrograf^{®}-III grade HHT-19 carbon nanofiber, sold by Pyrograf Products, Inc. (Cedarville, Ohio), is a heat-treated (up to 3000 °C) carbon nanofiber having a diameter of 100 to 200 nm and a length of 30,000 to 100,000 nm.

SDC MP101 Crystal Coat Resin, which is sold by SDC Technologies, Inc. (Anaheim, CA) is a solution containing 31 % (w/w) of a silicone resin consisting essentially of MeSiO_{3/2} units and SiO_{4/2} units in a mixture of methanol, 2-propanol, water, and acetic acid (~1-2%).

Glass Fabric is a heat-treated glass fabric prepared by heating style 106 electrical glass fabric having a plain weave and a thickness of 37.5 µm at 575 °C for 6 h. The untreated glass fabric was obtained from JPS Glass (Slater, SC).

### Example 1

This example demonstrates the preparation of a chemically oxidized carbon nanofiber. Pyrograf^{®}-III carbon nanofiber (2.0 g), 12.5 mL of concentrated nitric acid, and 37.5 mL of concentrated sulfuric acid were combined sequentially in a 500-mL three-neck flask equipped with a condenser, a thermometer, a Teflon-coated magnetic stirring bar, and a temperature controller. The mixture was heated to 80 °C and kept at this temperature for 3 h. The mixture was then cooled by placing the flask on a layer of dry ice in a one gallon pail. The mixture was poured into a Buchner funnel containing a nylon membrane (0.8 µm) and the carbon nanofibers were collected by vacuum filtration. The nanofibers remaining on the membrane were washed several times with deionized water until the pH of the filtrate was equal to the pH of the wash water. After the last wash, the carbon nanofibers were kept in the funnel for an additional 15 min. with continued application of the vacuum. Then the nanofibers, supported on the filter membrane, were placed in an oven at 100 °C for 1 h. The carbon nanofibers were removed from filter membrane and stored in a dry sealed glass jar.

### Example 2

The oxidized carbon nanofiber of Example 1 (0. 0.031 g) and 50.0 g of SDC MP101 Crystal Coat Resin were combined in a glass vial. The vial was placed in an ultrasonic bath for 30 min. The mixture was then subjected to centrifugation at 2000 rpm for 30 min. The supernatant composition was used to prepare a silicone resin film.

Glass fabric (38.1 cm x 8.9 cm) was impregnated with the preceding composition by passing the fabric through the composition at a rate of about 5 cm/s. The impregnated fabric was then hung vertically in a fume hood at room temperature to dry, and then cured in an air-circulating oven according to the following cycle: room temperature to 75 °C at 1 °C/min., 75 °C for 1 h; 75 °C to 100 °C at 1 °C/min., 100 °C for 1 h; and 100 °C to 125 °C at 1 °C/min., 125 °C for 1 h. The oven was turned off and the silicone resin film was allowed to cool to room temperature. The impregnation, drying, and curing steps were repeated to increase the thickness of the film.

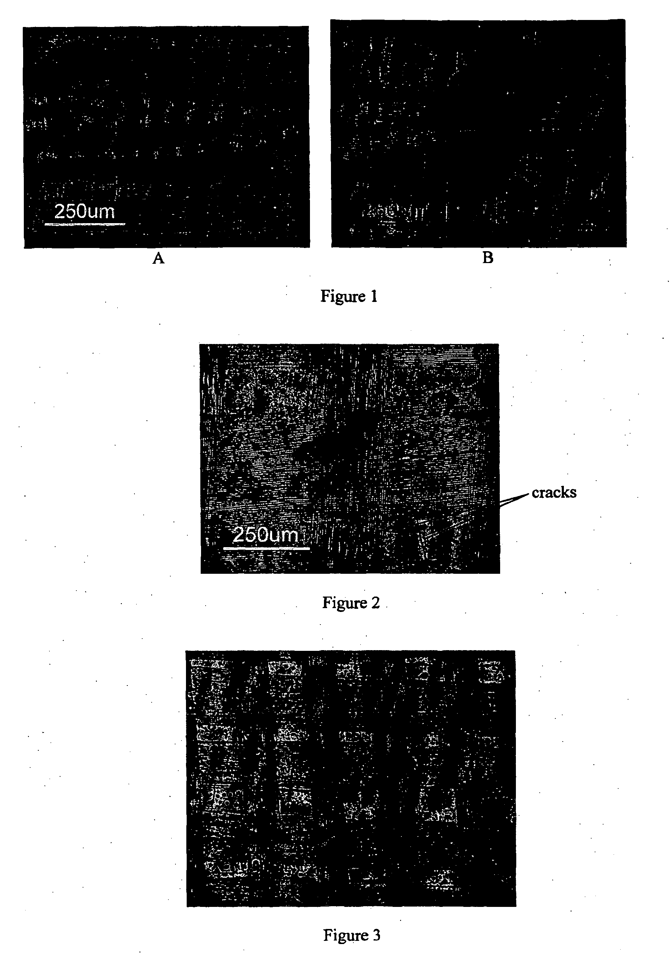

The reinforced silicone resin film was then heat-treated in an air-circulating oven under the following conditions: room temperature to 400 °C at 5 °C/min., 400 °C for 1 h. The oven was turned off and the film was allowed to cool to room temperature. Photomicrographs of the reinforced silicone resin film before and after heat treatment are shown in Figures 1A and 1B, respectively. Both films are free of cracks.

### Example 3

Pyrograf^{®}-III carbon nanofiber (0.0.031 g) and 50.0 g of SDC MP101 Crystal Coat Resin were combined in a glass vial. The vial was placed in an ultrasonic bath for 30 min. The mixture was then subjected to centrifugation at 2000 rpm for 30 min. The supernatant composition was used to prepare a reinforced silicone resin film according to the method of Example 2.

After curing, the reinforced silicone resin film was heat-treated in an air-circulating oven under the following conditions: room temperature to 400 °C at 5 °C/min., 400 °C for 1 h. The oven was turned off and the film was allowed to cool to room temperature. A photomicrograph of the reinforced silicone resin film after heat treatment is shown in Figure 2. The film contains cracks.

### Example 4

The oxidized carbon nanofiber of Example 1 (0.155 g) and 50.0 g of SDC MP101 Crystal Coat Resin were combined in a glass vial. The vial was placed in an ultrasonic bath for 30 min. The mixture was then subjected to centrifugation at 2000 rpm for 30 min. The supernatant composition was used to prepare a reinforced silicone resin film according to the method of Example 2.

After curing, the reinforced silicone resin film was heat-treated in an oven in a nitrogen atmosphere under the following conditions: room temperature to 575 °C at 5 °C/min.; 575 °C for 1 h. The oven was turned off and the film was allowed to cool to room temperature. A photomicrograph of the reinforced silicone resin film after heat treatment is shown in Figure 3. The film is free of cracks.

### Comparative Example 1

Glass fabric (38.1 cm x 8.9 cm) was impregnated with SDC Abrasion-resistant Coating MP101 by passing the fabric through the composition at a rate of about 5 cm/s. The impregnated fabric was then hung vertically to dry in a fume hood at room temperature, and then heated in an air-circulating oven at 50 ° C for 10 min. The impregnation and drying steps were repeated to increase the thickness of the film.

The impregnated glass fabric was then heated according to the following cycle: room temperature to 75 °C at 1 °C/min., 75 °C for 1 h; 75 °C to 100 °C at 1 °C/min., 100 °C for 1 h; and 100 °C to 125 °C at 1 °C/min., 125 °C for 1 h. The oven was turned off and the silicone resin film was allowed to cool to room temperature.

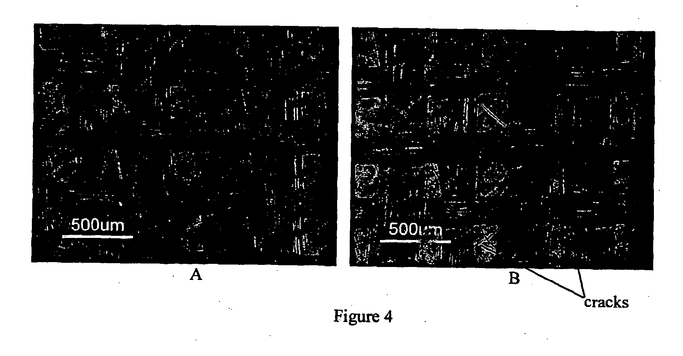

The unreinforced silicone resin film was then heat-treated in an air-circulating oven under the following conditions: room temperature to 400 °C at 5 °C/min., 400 °C for 1 h. The oven was turned off and the film was allowed to cool to room temperature. Photomicrographs of the unreinforced silicone resin film before and after heat treatment are shown in Figures 4A and 4B, respectively. The heat-treated film contains numerous cracks.

## Claims

1. A method of preparing a reinforced silicone resin film, the method comprising the steps of:
impregnating a fiber reinforcement in a nanomaterial-filled silicone composition, wherein the nanomaterial-filled silicone composition comprises:
a condensation-curable silicone composition comprising a silicone resin having an average of at least two silicon-bonded hydrogen atoms, hydroxy groups, or hydrolysable groups per molecule, and
a carbon nanomaterial; and
curing the silicone resin of the impregnated fiber reinforcement.

2. The method according to claim 1, wherein the condensation-curable silicone composition comprises a silicone resin having the formula (R¹R²₂SiO_{1/2})_{w}(R²₂SiO_{2/2})ₓ (R²SiO_{3/2})_{y}(SiO_{4/2})_{z} (I), wherein R¹ is C₁ to C₁₀ hydrocarbyl or C₁ to C₁₀ halogen-substituted hydrocarbyl, R² is R¹, -H, -OH, or a hydrolysable group, w is from 0 to 0.95, x is from 0 to 0.95, y is from 0 to 1, z is from 0 to 0.95, w+x+y+z=1, y+z is from 0.05 to 1, and w+x is from 0 to 0.95, provided the silicone resin has an average of at least two silicon-bonded hydrogen atoms, hydroxy groups, or hydrolysable groups per molecule.

3. The method according to claim 1, wherein the condensation-curable silicone composition comprises (A) a rubber-modified silicone resin prepared by reacting an organosilicon compound selected from (i) a silicone resin having the formula (R¹R⁴₂SiO_{1/2})_{w}(R⁴₂SiO_{2/2})ₓ(R⁴SiO_{3/2})_{y}(SiO_{4/2})_{z} (II) and (ii) hydrolysable precursors of (i), and a silicone rubber having the formula R⁵₃SiO(R¹R⁵SiO)ₘSiR⁵₃ (III) in the presence of water, a condensation catalyst, and an organic solvent to form a soluble reaction product, wherein R¹ is C₁ to C₁₀ hydrocarbyl or C₁ to C₁₀ halogen-substituted hydrocarbyl, R⁴ is R¹, -OH, or a hydrolysable group, R⁵ is R¹ or a hydrolysable group, m is from 2 to 1,000, w is from 0 to 0.95, x is from 0 to 0.95, y is from 0 to 1, z is from 0 to 0.95, w+x+y+z=1, y+z is from 0.05 to 1, and w+x is from 0 to 0.95, provided the silicone resin (II) has an average of at least two silicon-bonded hydroxy or hydrolysable groups per molecule, the silicone rubber (III) has an average of at least two silicon-bonded hydrolysable groups per molecule, and the mole ratio of silicon-bonded hydrolysable groups in the silicone rubber (III) to silicon-bonded hydroxy or hydrolysable groups in the silicone resin (II) is from 0.01 to 1.5; and (B) a condensation catalyst.

4. The method according to claim 1, wherein the carbon nanomaterial is selected from carbon nanoparticles, fibrous carbon nanomaterials, and layered carbon nanomaterials.

5. The method according to claim 1, wherein the fiber reinforcement comprises glass fibers or quartz fibers.

6. The method according to claim 1, wherein the concentration of the carbon nanomaterial in the nanomaterial-filled silicone composition is from 0.001 to 50% (w/w), based on the total weight of the nanomaterial-filled silicone composition.

7. The method according to claim 1, further comprising forming a coating on at least a portion of the reinforced silicone resin film.

8. The method according to claim 7, wherein the coating is a cured silicone resin.

9. A reinforced silicone resin film prepared according to the methods of claims 1 or 7.

## Patentansprüche

1. Ein Verfahren zum Herstellen einer verstärkten Silikonharzfolie, wobei das Verfahren die folgenden Schritte beinhaltet:
Imprägnieren einer Faserverstärkung in einer mit Nanomaterial gefüllten Silikonzusammensetzung, wobei die mit Nanomaterial gefüllte Silikonzusammensetzung Folgendes beinhaltet:
eine durch Kondensation härtbare Silikonzusammensetzung, die ein Silikonharz, das einen Durchschnitt von mindestens zwei siliciumgebundenen Wasserstoffatomen, Hydroxygruppen oder hydrolysierbaren Gruppen pro Molekül aufweist, beinhaltet, und
ein Kohlenstoff-Nanomaterial; und
Härten des Silikonharzes der imprägnierten Faserverstärkung.

2. Verfahren gemäß Anspruch 1, wobei die durch Kondensation härtbare Silikonzusammensetzung ein Silikonharz mit der Formel (R¹R²₂SiO_{1/2})_{w}(R²₂SiO_{2/2})ₓ(R²SiO_{3/2})_{y}(SiO_{4/2})_{z} (I) beinhaltet, wobei R¹ C₁- bis C₁₀-Hydrocarbyl oder halogensubstituiertes C₁- bis C₁₀-Hydrocarbyl ist, R² R¹, -H, -OH oder eine hydrolysierbare Gruppe ist, w von 0 bis 0,95 beträgt, x von 0 bis 0,95 beträgt, y von 0 bis 1 beträgt, z von 0 bis 0,95 beträgt, w + x + y + z = 1, y + z von 0,05 bis 1 beträgt und w + x von 0 bis 0,95 beträgt, vorausgesetzt, dass das Silikonharz einen Durchschnitt von mindestens zwei siliciumgebundenen Wasserstoffatomen, Hydroxygruppen oder hydrolysierbaren Gruppen pro Molekül aufweist.

3. Verfahren gemäß Anspruch 1, wobei die durch Kondensation härtbare Silikonzusammensetzung Folgendes beinhaltet: (A) ein kautschukmodifiziertes Silikonharz, das durch Reagierenlassen einer Organosiliciumverbindung, ausgewählt aus (i) einem Silikonharz mit der Formel (R¹R⁴₂SiO_{1/2})_{w}(R⁴₂SiO_{2/2})ₓ(R⁴SiO_{3/2})_{y}(SiO_{4/2})_{z} (II) und (ii) hydrolysierbaren Präkursoren von (i) und einem Silikonkautschuk mit der Formel R⁵₃SiO(R¹R⁵SiO)ₘSiR⁵₃ (III) in der Gegenwart von Wasser, einem Kondensationskatalysator und einem organischen Lösungsmittel zum Bilden eines löslichen Reaktionsprodukts hergestellt wird, wobei R¹ C₁- bis C₁₀-Hydrocarbyl oder halogensubstituiertes C₁- bis C₁₀-Hydrocarbyl ist, R⁴ R¹, -OH oder eine hydrolysierbare Gruppe ist, R⁵ R¹ oder eine hydrolysierbare Gruppe ist, m von 2 bis 1000 beträgt, w von 0 bis 0,95 beträgt, x von 0 bis 0,95 beträgt, y von 0 bis 1 beträgt, z von 0 bis 0,95 beträgt, w + x + y + z = 1, y + z von 0,05 bis 1 beträgt und w + x von 0 bis 0,95 beträgt, vorausgesetzt, dass das Silikonharz (II) einen Durchschnitt von mindestens zwei siliciumgebundenen Hydroxy- oder hydrolysierbaren Gruppen pro Molekül aufweist, der Silikonkautschuk (III) einen Durchschnitt von mindestens zwei siliciumgebundenen hydrolysierbaren Gruppen pro Molekül aufweist und das Molverhältnis von siliciumgebundenen hydrolysierbaren Gruppen in dem Silikonkautschuk (III) zu siliciumgebundenen Hydroxygruppen oder hydrolysierbaren Gruppen in dem Silikonharz (II) von 0,01 bis 1,5 beträgt; und (B) einen Kondensationskatalysator.

4. Verfahren gemäß Anspruch 1, wobei das Kohlenstoff-Nanomaterial aus Kohlenstoff-Nanopartikeln, faserigen Kohlenstoff-Nanomaterialien und schichtigen Kohlenstoff-Nanomaterialien ausgewählt ist.

5. Verfahren gemäß Anspruch 1, wobei die Faserverstärkung Glasfasern oder Quarzfasern beinhaltet.

6. Verfahren gemäß Anspruch 1, wobei die Konzentration des Kohlenstoff-Nanomaterials in der mit Nanomaterial gefüllten Silikonzusammensetzung von 0,001 bis 50 % (Massenanteil), basierend auf dem Gesamtgewicht der mit Nanomaterial gefüllten Silikonzusammensetzung, beträgt.

7. Verfahren gemäß Anspruch 1, das ferner das Bilden einer Beschichtung auf mindestens einem Abschnitt der verstärkten Silikonharzfolie beinhaltet.

8. Verfahren gemäß Anspruch 7, wobei die Beschichtung ein gehärtetes Silikonharz ist.

9. Ein verstärkter Silikonharzfilm, der gemäß den Verfahren von Anspruch 1 oder 7 hergestellt ist.

## Revendications

1. Une méthode pour préparer un film de résine de silicone renforcé, la méthode comprenant les étapes :
d'imprégnation d'un renfort en fibres dans une composition de silicone remplie de nanomatériau, la composition de silicone remplie de nanomatériau comprenant :
une composition de silicone durcissable par condensation comprenant une résine de silicone ayant une moyenne d'au moins deux atomes d'hydrogène, groupes hydroxy, ou groupes hydrolysables liés au silicium par molécule ; et
un nanomatériau de carbone ; et
de durcissement de la résine de silicone du renfort en fibres imprégné.

2. La méthode selon la revendication 1, dans laquelle la composition de silicone durcissable par condensation comprend une résine de silicone ayant la formule (R¹R²₂SiO_{1/2})_{w}(R²₂SiO_{2/2})ₓ(R²SiO_{3/2})_{y}(SiO_{4/2})_{z} (I), où R¹ est un hydrocarbyle en C₁ à C₁₀ ou un hydrocarbyle substitué par un halogène en C₁ à C₁₀, R² est R¹, -H, -OH ou un groupe hydrolysable, w est compris entre 0 et 0,95, x est compris entre 0 et 0,95, y est compris entre 0 et 1, z est compris entre 0 et 0,95, w+x+y+z = 1, y+z est compris entre 0,05 et 1, et w+x est compris entre 0 et 0,95, à condition que la résine de silicone ait une moyenne d'au moins deux atomes d'hydrogène, groupes hydroxy, ou groupes hydrolysables liés au silicium par molécule.

3. La méthode selon la revendication 1, dans laquelle la composition de silicone durcissable par condensation comprend (A) une résine de silicone modifiée au caoutchouc préparée en faisant réagir un composé d'organosilicium sélectionné parmi (i) une résine de silicone ayant la formule (R¹R⁴₂SiO_{1/2})_{w}(R⁴₂SiO_{2/2})ₓ (R⁴SiO_{3/2})_{y}(SiO_{4/2})_{z} (II) et (ii) des précurseurs hydrolysables de (i), et un caoutchouc de silicone ayant la formule R⁵₃SiO(R¹R⁵SiO)ₘSiR⁵₃ (III) en présence d'eau, d'un catalyseur de condensation, et d'un solvant organique pour former un produit de réaction soluble, où R¹ est un hydrocarbyle en C₁ à C₁₀ ou un hydrocarbyle substitué par un halogène en C₁ à C₁₀, R⁴ est R¹, -OH, ou un groupe hydrolysable, R⁵ est R¹ ou un groupe hydrolysable, m est compris entre 2 et 1 000, w est compris entre 0 et 0,95, x est compris entre 0 et 0,95, y est compris entre 0 et 1, z est compris entre 0 et 0,95, w+x+y+z = 1, y+z est compris entre 0,05 et 1, et w+x est compris entre 0 et 0,95, à condition que la résine de silicone (II) ait une moyenne d'au moins deux groupes hydroxy ou hydrolysables liés au silicium par molécule, que le caoutchouc de silicone (III) ait une moyenne d'au moins deux groupes hydrolysables liés au silicium par molécule, et que le rapport molaire entre des groupes hydrolysables liés au silicium dans le caoutchouc de silicone (III) et des groupes hydroxy ou hydrolysables liés au silicium dans la résine de silicone (II) soit compris entre 0,01 et 1,5 ; et (B) un catalyseur de condensation.

4. La méthode selon la revendication 1, dans laquelle le nanomatériau de carbone est sélectionné parmi des nanoparticules de carbone, des nanomatériaux de carbone fibreux, et des nanomatériaux de carbone en couches.

5. La méthode selon la revendication 1, dans laquelle le renfort en fibres comprend des fibres de verre ou des fibres de quartz.

6. La méthode selon la revendication 1, dans laquelle la concentration du nanomatériau de carbone dans la composition de silicone remplie de nanomatériau est comprise entre 0,001 et 50 % (en poids), rapportée au poids total de la composition de silicone remplie de nanomatériau.

7. La méthode selon la revendication 1, comprenant en outre la formation d'un revêtement sur au moins une portion du film de résine de silicone renforcé.

8. La méthode selon la revendication 7, dans laquelle le revêtement est une résine de silicone durcie.

9. Un film de résine de silicone renforcé préparé selon les méthodes des revendications 1 ou 7.
